# EUROPEAN PATENT APPLICATION

(11) **EP 2 871 879 A1**
(43) Date of publication of application: **13.05.2015**
(21) Application number: 13813752.6
(22) Date of filing: 31.05.2013
(51) Int. Cl.: H04W 16/14, H04J 1/00, H04W 88/10

(54) **WIRELESS COMMUNICATION APPARATUS AND METHOD FOR SELECTING COMMUNICATION CHANNELS**

(30) Priority: 04.07.2012 JP 2012150358
(71) Applicant: Mitsubishi Electric Corporation, Tokyo 100-8310 (JP)
(72) Inventor: KOBAYASHI, Masanori, Tokyo 100-8310 (JP); UCHIDA, Shigeru, Tokyo 100-8310 (JP)
(74) Representative: Sajda, Wolf E.
(86) International application number: PCT/JP2013/065192
(87) International publication number: WO 2014/007008

(57) **Abstract**

It is an object of the present invention to provide a wireless communication apparatus that can make a control so that communication of at least two wireless communication devices where frequency bands partially overlap with each other does not interfere with each other. According to the present invention, while a device controller (22A) is executing an interference quantity measuring process under control of a general controller (21), a wireless communication device (12B) is always brought into a state that it transmits a radio wave (dummy frame) by control of a device controller (22B). The device controller (22A) executes channel selecting process for selecting one of the plurality of candidates of a communication channel A as the communication channel A based on the plurality of interference quantities (corresponding to the plurality of candidates of the communication channel A) obtained at the time of the execution of the interference quantity measuring process.

## Description

### Technical Field

The present invention relates to a wireless communication apparatus having at least two wireless communication devices whose frequency bands partially overlap with each other, and a method for selecting communication channel in one of wireless communication devices.

### Background Art

For example, Wi-Fi (IEEE802.11) that is the technical standard relating to wireless LAN, and ZigBee (IEEE802.15.4) that is the technical standard relating to Personal Area Network (PAN) are different wireless communication standards, but since their frequency bands to be used overlap with each other, they occasionally interfere with each other depending on communication channels to be selected, and thus communication performance is deteriorated.

Wi-Fi has spread as a technique for enabling information device terminals such as personal computers to structure networks without a wire in limited regions such as home and SOHO (Small Office/Home Office). Recently, mobile terminals such as smart phones and tablet terminals have been used for an access to an internet via domestic or hot spot LAN using Wi-Fi instead of a network of a mobile communication carrier. Further, ZigBee is inexpensive and its power consumption is low, and has spread as the technique that enables household electric appliances and measuring apparatuses to structure networks without wiring.

In order to aggregate communication equipment at home, recently an increasing number of rooters that connect WAN (Wide Area Network) (Internet) and domestic LAN are mounted with Wi-Fi access points. Further, it is expected that a number of household electric appliances that have a communication function such as ZigBee increases, and it is easily expected that also the communication function of ZigBee is desired to be mounted into one rooter similarly to Wi-Fi access points in future.

It is expected that the rooters become bases of communication equipment at home in future, and in this case, a use case where the rooters simultaneously communicate with Wi-Fi devices and ZigBee devices is assumed, but since overlapping between frequency bands of the Wi-Fi devices and the ZigBee devices causes mutual interference, communication performance is deteriorated. Particularly when a plurality of wireless communication devices is aggregated into one apparatus, since the wireless communication devices are positioned close to each other, radio waves that are transmitted from the devices are likely to be the biggest interference.

When at least two wireless communication devices whose frequency bands to be used overlap with each other are aggregated into one communication equipment, each of the wireless communication devices should select a suitable channel in order to avoid the mutual interference, but demanding general users to select such a suitable channel, which is high degree of difficulty, is extremely difficult.

Further, a method for measuring an interference quantity in advance at the time of selecting a communication channel and automatically selecting a channel with less interference (simple automatic selecting method) is considered, but this method is assumed that a wireless communication device that might be interference always transmits radio waves such as beacon.

However, since ZigBee does not always transmit radio waves due to a characteristic that realizes low power consumption, the above simple automatic selecting method is likely to select an improper channel and thus the method is likely not to work well more than a little.

Further, for example, Patent Document 1 discloses a wireless apparatus that makes a control so as to stop use of radio waves generated from a radio generating apparatus and radio waves in a frequency band where radio interference occurs when a dummy frame is received as a technique relating to the selection of communication channels.

### Prior Art Document

### Patent Document

Patent Document 1: International Publication No. WO 2008/004562 A1

### Summary of the the Invention

### Problems to be Solved by the Invention

In a conventional wireless communication apparatus that has a plurality of wireless communication devices whose frequency bands partially overlap with each other, such as wireless communication devices for Wi-Fi and ZigBee, the following problem arises.

That is to say, when Wi-Fi and ZigBee are simultaneously used, their communications are performed independently in respective devices. Even when the automatic channel selection is made through measurement of interference quantity in order to select a use channel for Wi-Fi, for example, the interference quantity with the ZigBee side cannot be measured if the ZigBee side does not transmit a radio wave, and there arises the problem that there is not a little possibility that a channel that interferes with ZigBee is selected mistakenly. The technique disclosed in Patent Document 1 does not assume the above problem at all.

The present invention is devised in order to solve the above problem, and its object is to obtain a wireless communication apparatus having at least two wireless communication devices whose frequency bands partially overlap with each other and which can make a control so that their communications of the at least two wireless communication devices do not interfere with each other, and a method for selecting communication channel.

### Means for Solving the Problem

A wireless communication apparatus according to a first aspect of the present invention includes a first wireless communication device capable of performing wireless communication in a first frequency band; a second wireless communication device capable of performing wireless communication in a second frequency band, at least a part of the second frequency band overlapping with the first frequency band; a first device controller for selecting a first communication channel from a plurality of first communication channel candidates in the first frequency band and controlling communication of the first wireless communication device using the first communication channel; and a second device controller for controlling communication of the second wireless communication device using a second communication channel in the second frequency band, wherein when the first communication channel is selected, the first device controller is adapted to execute an interference quantity measuring process for measuring a plurality of interference quantities in the communication of the first wireless communication device using the plurality of first communication channel candidates so as to select one of the plurality of first communication channel candidates as the first communication channel based on the plurality of interference quantities, and the second device controller is adapted to control the second wireless communication device during the execution of the interference quantity measuring process in the first device controller so that a dummy data transmitting process for transmitting dummy data by using the second communication channel is executed.

### Effects of the Invention

The wireless communication apparatus according to the first aspect of the present invention allows the second wireless communication device to execute the dummy data transmitting process for transmitting dummy data using the second communication channel under control of the second device controller, and simultaneously the first device controller selects one of the plurality of first communication channel candidates as the first communication channel based on the plurality of interference quantities obtained by executing the interference quantity measuring process (corresponding to the plurality of first communication channel candidates).

For this reason, a candidate in which the least interference occurs is selected as the first communication channel from the plurality of first communication channel candidates at the time of data transmission in the second wireless communication device using the second communication channel. As a result, also when the first and second wireless communication devices simultaneously execute the communication process at the first and second communication channels, an effect that enables a transmitting/receiving process with a high communication rate and with excellent response performance is produced.

Objects, features, aspects and advantages of the present invention are made to be clearer by the following detailed description and the accompanying drawings.

### Brief Description of Drawings

- FIG. 1: is an explanatory diagram schematically illustrating a wireless communication apparatus and its peripheral configuration according to the first embodiment of the present invention.
- FIG. 2: is a block diagram illustrating a configuration of the wireless communication apparatus according to the first embodiment of the present invention.
- FIG. 3: is an explanatory diagram illustrating a procedure for executing a process for selecting a communication channel A of a wireless communication device 12A in the wireless communication apparatus according to the first embodiment.
- FIG. 4: is an explanatory diagram illustrating one example of channel selection based on the measurement of the interference quantities in the wireless communication apparatus according to the first embodiment.
- FIG. 5: is a block diagram illustrating the configuration of the wireless communication apparatus according to a second embodiment of the present invention.
- FIG. 6: is a flowchart illustrating transmission control contents of a data transmitter with respect to a wireless communication device 12B according to the second embodiment.
- FIG. 7: is an explanatory diagram illustrating an example of a control operation sequence in the wireless communication device 12B according to the second embodiment.
- FIG. 8: is a block diagram illustrating a configuration of the wireless communication apparatus according to a third embodiment of the present invention.
- FIG. 9: is an explanatory diagram illustrating profile contents indicated by profile data.
- FIG. 10: is an explanatory diagram illustrating an example of results of measuring a plurality of interference quantities through the wireless communication apparatus according to the third embodiment.
- FIG. 11: is an explanatory diagram illustrating a result of calculating an assumed interference quantity based on the plurality of interference quantities and the profile data.

### Description of Embodiments

### First Embodiment

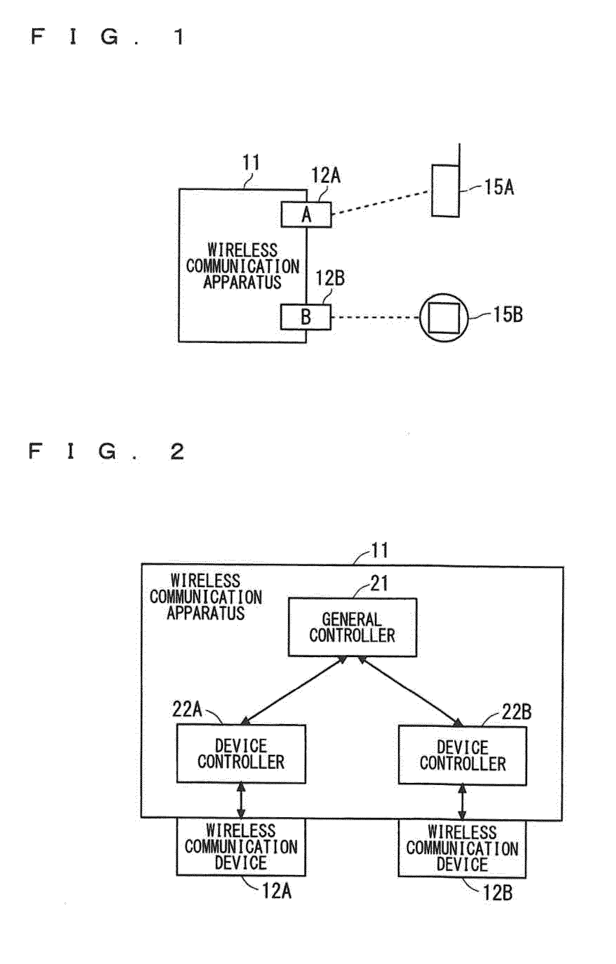

FIG. 1 is an explanatory diagram schematically illustrating a wireless communication apparatus and its peripheral configuration according to the first embodiment of the present invention. A wireless communication apparatus 11 according to the present embodiment is mounted with two wireless communication devices 12A and 12B whose frequency bands overlap with each other.

The wireless communication device 12A can communicate with a communication equipment 15A that fulfills communication standards of Wi-Fi, for example, and the wireless communication device 12B can communicate with a communication equipment 15B that fulfills communication standards of ZigBee, for example.

That is to say, the wireless communication device 12A can perform wireless communication on a communication channel A in a first frequency band for the Wi-Fi standards, for example, and the wireless communication device 12B can perform wireless communication on a communication channel B in a second frequency band for the ZigBee standards, for example. At least a part of the second frequency band overlaps with the first frequency band.

FIG. 2 is a block diagram illustrating a constitution of the wireless communication apparatus 11 according to the first embodiment of the present invention. The wireless communication apparatus 11 includes a general controller 21, device controllers 22 (22A and 22B). The controllers 21 and 22 can be realized by software process executed by a program, for example.

The device controller 22A selects the communication channel A (first communication channel) to be used by the wireless communication device 12A from a plurality of candidates of the communication channel A (a plurality of first communication channel candidates) in the first frequency band, and can control the communication process with the communication equipment 15A (FIG. 1) to be executed by the wireless communication device 12A using the selected communication channel A.

Similarly, the device controller 22B selects the communication channel B (second communication channel) to be used by the wireless communication device 12B, and can control the communication process with the communication equipment 15B (FIG. 1) to be executed by the wireless communication device 12B using the selected communication channel B.

The general controller 21 integrally controls the device controllers 22A and 22B so as to enable execution of a process for selecting the communication channel A (including interference quantity measuring process), which will be described later.

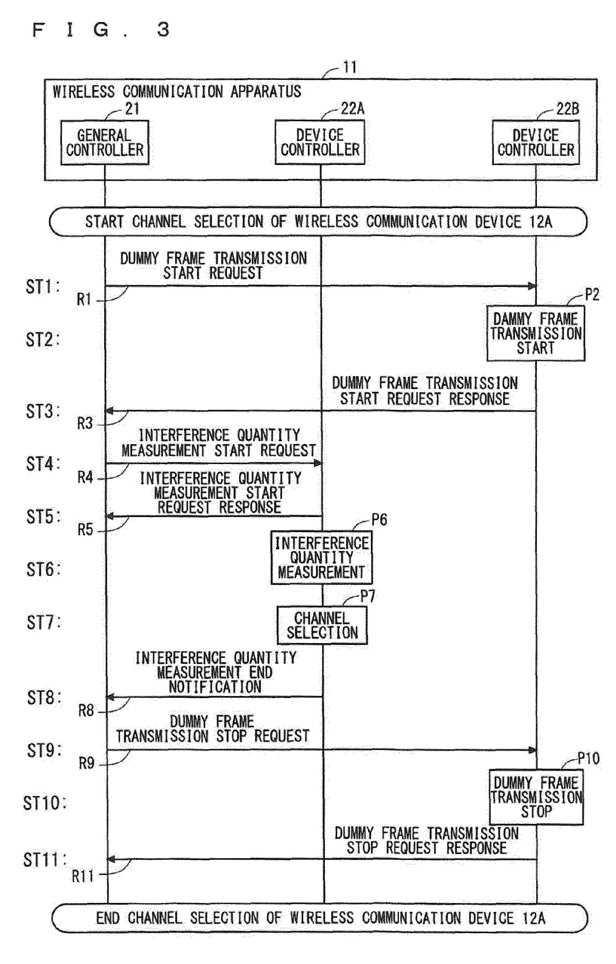

FIG. 3 is an explanatory diagram illustrating a processing procedure of the method for selecting the communication channel A of the wireless communication device 12A in the wireless communication apparatus 11 according to the first embodiment. It is to be noted that, as a precondition for selecting the communication channel A, the communication channel B of the wireless communication device 12B for executing the communication process under the control of the device controller 22B be already selected.

The general controller 21 sends a dummy frame transmission starting request R1 to the device controller 22B in step ST1.

The device controller 22B that receives the dummy frame transmission starting request R1 executes dummy frame transmission start (process) P2, and transmits a dummy frame (dummy data) from the wireless communication device 12B using the communication channel B first in step ST2.

Thereafter, the device controller 22B sends back a dummy frame transmission start request response R3 for instructing the start of the transmission of the dummy frame to the general controller 21 in step ST3.

The dummy frame transmission start P2 means that the device controller 22B starts the process for controlling the wireless communication device 12B so that the wireless communication device 12B starts to transmit a dummy frame of a format that does not influence all transmitting/receiving process of all communication apparatuses corresponding to the communication equipment 15 using the currently selected communication channel B.

The device controller 22 controls the wireless communication device 12B so that the dummy frame is continuously transmitted at constant intervals using the communication channel B until dummy frame transmission stop P10 is executed, described later.

Subsequently, the general controller 21 that receives the dummy frame transmission start request response R3 from the device controller 22B sends an interference quantity measurement start request R4 to the device controller 22A in step ST4.

The device controller 22A that receives the interference quantity measurement start request R4 sends back an interference quantity measurement start request response R5 to the general controller 21 in step ST5.

The device controller 22A executes interference quantity measurement (process) P6 in step ST6. At this time, the wireless communication device 12A to be controlled measures a plurality of interference quantities at the time of the communication of a plurality of communicable candidates of the communication channel A (the plurality of first communication channel candidates).

That is to say, while the plurality of candidates of the communication channel A are being sequentially switched, the interference quantity is measured for each candidate of the communication channel A, so that the plurality of interference quantities corresponding to the plurality of candidates of the communication channel A are obtained.

Thereafter, channel selection (process) P7 is executed in step ST7 after the interference quantity measurement P6. The channel selection P7 selects a candidate of the communication channel A whose interference quantity is the smallest is selected as the communication channel A to be actually used from the plurality of candidates of the communication channel A.

The method for selecting the communication channel A is not limited to above one, and any one of the candidates of the communication channel A whose interference quantity is a predetermined reference level or less may be suitably selected.

The device controller 22A sends interference quantity measurement end notification R8 to the general controller 21 in step ST8 after the channel selection P7.

The general controller 21 that receives the interference quantity measurement end notification R8 makes dummy frame transmission stop request R9 for the device controller 22B in step ST9.

The device controller 22B that receives the dummy frame transmission stop request R9 executes dummy frame transmission stop (process) P10 in step ST10. As a result, the transmission of a dummy frame from the wireless communication device 12B using the communication channel B is ended.

Thereafter, the device controller 22B sends back dummy frame transmission stop request response R11 to the general controller 21 in step ST11. As a result, the general controller 21 ends the process for selecting the communication channel A of the wireless communication device 12A.

After the above steps, the wireless communication apparatus 11 ends the method for selecting the communication channel A of the wireless communication device 12A.

In the procedure according to the first embodiment, while the device controller 22A is performing the interference quantity measurement P6 under the control of the general controller 21, the wireless communication device 12B inevitably transmits radio waves (dummy frame) through the control of the device controller 22B.

That is to say, the general controller 21 integrally controls the device controllers 22A and 22B so that the device controller 22B inevitably executes a dummy data transmitting process during the interference quantity measurement P6 performed by the device controller 22A.

For this reason, an interference quantity due to a use radio wave of the wireless communication device 12B is inevitably added to measured results of the interference quantity measurement P6 (the plurality of interference quantities). Therefore, when the channel selection P7 is performed based on the plurality of interference quantities so that one of the plurality of candidates of the communication channel A is selected as the communication channel A, the wireless communication device 12A can select the optimum communication channel A on which the communications of the wireless communication devices 12A and 12B that are simultaneously performed do no interfere with each other.

The first embodiment describes a case where the number of the wireless communication devices to be mounted is two (the wireless communication devices 12A and 12B), but the similar method can be applied also to a case where the number of the wireless communication devices to be mounted is three or more. When, for example, a wireless communication device 12C is added as the third wireless communication device, control is made so that the wireless communication device 12B and the wireless communication device 12C transmit dummy frames, respectively while the wireless communication device 12A is measuring the interference quantities.

While the wireless communication apparatus 11 according to the first embodiment allows the wireless communication device 12B to transmit dummy data using the communication channel B under the control of the device controller 22B (the dummy data transmitting process), the device controller 22A selects one of the plurality of candidates of the communication channel A as the communication channel A based on the plurality of interference quantities obtained by executing the interference quantity measuring process.

For this reason, a candidate whose interference occurs the least at the time of data transmission through the wireless communication device 12B using the communication channel B can be selected as the communication channel A from the plurality of candidates of the communication channel A. As a result, also when the wireless communication devices 12A and 12B simultaneously execute the communication process on the communication channel A and the communication channel B, the transmitting/receiving process whose communication rate and response performance are excellent can be executed.

Further, since the suitable communication channel A can be selected, interference between the wireless communication devices 12A and 12B can be avoided. For this reason, a radio transmission time can be reduced and transmission power can be repressed low due to decrease in data retransmission, and thus this can contribute to saving of energy.

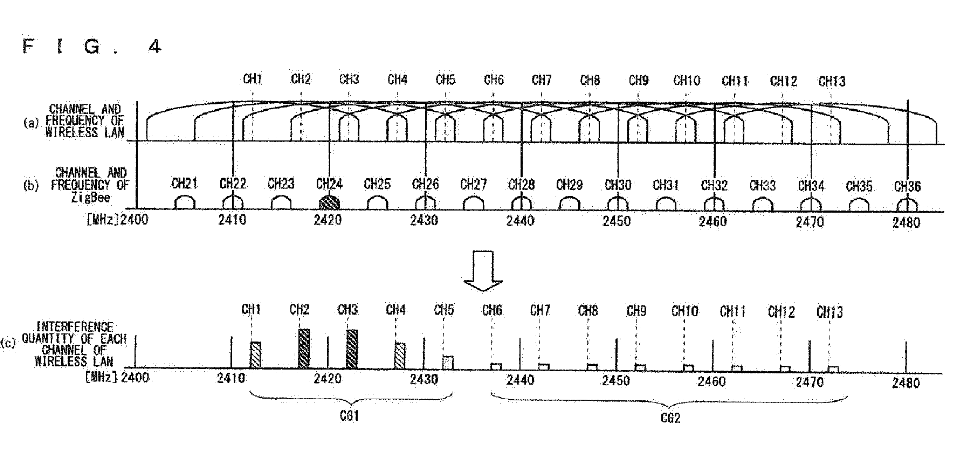

FIG. 4 is an explanatory diagram illustrating one example of the channel selection P7 based on the interference quantity measurement P6 in the wireless communication apparatus according to the first embodiment.

In this drawing, the wireless communication device 12A is for wireless LAN, and the wireless communication device 12B is for ZigBee.

As shown in FIG. 4(a), wireless LAN has 13 channels whose center frequency varies every 0.005 GHz (5 MHz) and that include a (communication) channel CH1 whose center frequency is 2.412 GHz through a (communication) channel CH13 whose center frequency is 2.472 GHz, and the standard of one channel width is set to 22 MHz.

As shown in FIG. 4(b), ZigBee has 16 channels ((communication) channels CH21 to CH36) whose center frequency varies every 0.005 GHz (5 MHz), namely, whose center frequencies are 2.405 GHz to 2.480 GHz, and the standard of one channel width is set to 2 MHz.

A case where while the channel CH24 is being used for ZigBee as the communication channel B, the channel selection for wireless LAN is performed is considered.

In this case, when the device controller 22A for wireless LAN performs the interference quantity measurement P6, the device controller 22B for ZigBee transmits a dummy frame using the channel CH24 (the communication channel B), and thus respective interference data of the channels CH1 to CH13 that are the plurality of candidates of the communication channel A are measured.

As shown in FIG. 4(c), since the center frequencies of the channels CH2 and CH3 for wireless LAN are quite close to the frequency of the channel CH 24 for ZigBee, the highest interference level is measured. Further, since the center frequencies of the channels CH1 and CH4 for wireless LAN are comparatively close to the frequency of the channel CH24 for ZigBee, interference whose level is the second highest next to the channels CH2 and CH3 is measured.

Further, since the use frequency band of the channel CH5 for wireless LAN does not overlap with but is close to the frequency band of the channel CH 24, interference whose level is higher next to the channels CH1 to CH4 is measured.

As a result, according to the interference quantity measurement P6, the channels CH1 to CH13 that are the plurality of candidates of the communication channel A are classified into a channel group CG1 (the channels CH1 to CH5) that should not be selected due to high interference level and a channel group CG2 (the channels CH6 to CH13) that can be selected due to sufficiently low interference level.

Therefore, in the channel selection P7 that is performed after the interference quantity measurement P6, any of the channels 6 to CH13 in the channel group CG2 is selected as the communication channel A to be actually used.

The first embodiment describes the example where the device controller 22A performs the interference quantity measurement P6 between the dummy frame transmission start P2 and the dummy frame transmission stop P10 performed by the device controller 22B, but when the control is made so that the device controller 22 executes the dummy data transmitting process at least during the interference quantity measurement P6 performed by the device controller 22A, the above effect can be achieved.

### Second Embodiment

The first embodiment describes the method where the wireless communication device 12B continuously transmits dummy frames in the constant period during the dummy frame transmission start P2 to the dummy frame transmission stop P10, but the communication band of the wireless communication device 12B is occupied by the data amount of the dummy frames, and thus the deterioration of performance such as a reduction in the communication rate and a reduction in the response speed might occur.

Since the object of the transmission of dummy frames is originally to reflect the interference quantity of radio waves sent from the wireless communication device 12B in the measured result of the interference quantity in the wireless communication device 12A (a plurality of interference quantities), when the wireless communication device 12B requires transmission of user data, not dummy frames but user data are directly transmitted without practical problem.

The above user data means transmission data other than the dummy frames, and originally represents actual data to be transmitted by the wireless communication device 12B. As a concrete example, the actual data includes control information on a protocol and information to be transmitted based on a request of an application.

The contents of process for transmitting dummy frames, which is executed by a wireless communication apparatus 13 according to the second embodiment while the deterioration of communication performance relating to the user data is being avoided similarly to the first embodiment, are described below.

The wireless communication apparatus 13 and its peripheral configuration according to the second embodiment are similar to the wireless communication apparatus 11 and its peripheral configuration according to the first embodiment shown in FIG. 1.

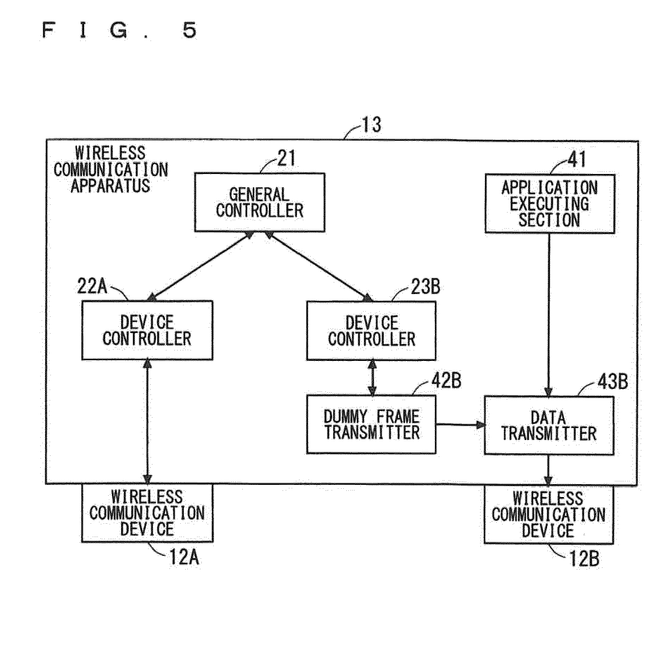

FIG. 5 is a block diagram illustrating a configuration of the wireless communication apparatus 13 according to the second embodiment of the present invention. The wireless communication apparatus 11 includes a general controller 21, a device controller 22A, a device controller 23B, an application executing section 41, a dummy frame transmitter 42B, and a data transmitter 43B. These controllers 21, 22A, 23B, 41, 42B, and 43B can be realized by a software process executed by a program, for example.

The difference from the wireless communication apparatus 11 according to the first embodiment is that the dummy frame transmitter 42B and the data transmitter 43B are added in order to clarify the control contents between the device controller 23B (corresponding to the device controller 22B in the first embodiment) and the wireless communication device 12B.

Further, the application executing section 41 that uses the wireless communication device 12B, namely, instructs the transmission of user data (actual data) is added. Respective components in the wireless communication apparatus 13 are described below. An executing section corresponding to the application executing section 41 may be present on the side of the wireless communication device 12A, but since this is tenuously connected with the present invention, it is not shown in FIG. 5.

When the device controller 23B directs the dummy frame transmission start, it gives constant period process start request R21 to the dummy frame transmitter 42B, and when directing the dummy frame transmission stop, it gives constant period process stop request R23 to the dummy frame transmitter 42B.

The application executing section 41 makes user data transmission request R50 for instructing the data transmitter 43B to transmit user data at any timing.

When receiving the constant period process start request R21 from the device controller 23B, the dummy frame transmitter 42B starts a constant periodic operation for requesting the data transmitter 43B to transmit a dummy frame every period, and when receiving the constant period process stop request R23 from the device controller 23B, it stops the constant periodic operation.

When receiving a dummy frame transmission request R31 from the dummy frame transmitter 42B, the data transmitter 43B makes dummy frame transmission control for the wireless communication device 12B, and when receiving the user data transmission request R50 from the application executing section 41, it executes user data transmission (process) P50 so as to control the transmission of user data for the wireless communication device 12B. However, the data transmitter 43B ignores the dummy frame transmission request just after the execution of the user data transmission P50 exceptionally, and does not make the dummy frame transmission control.

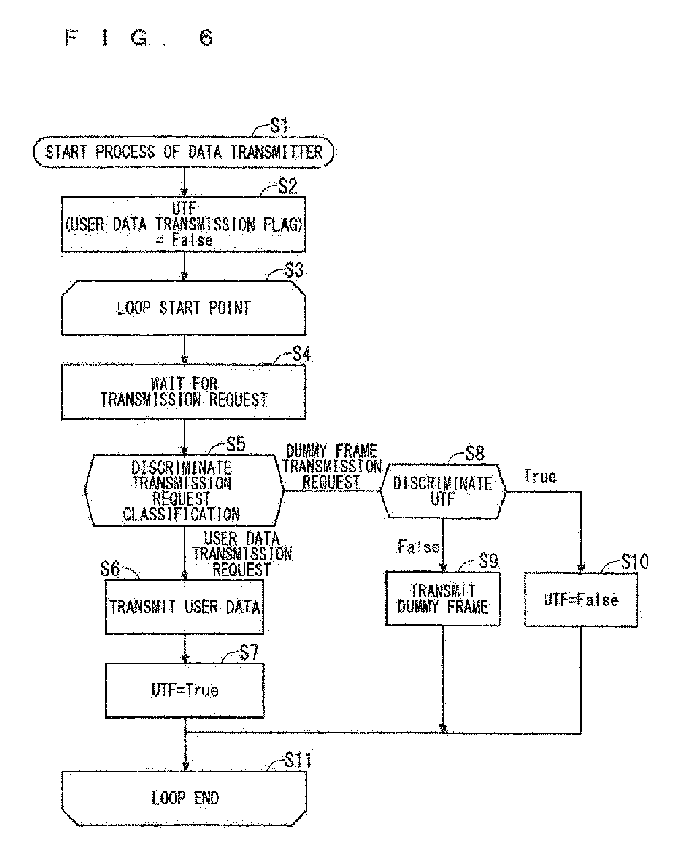

FIG. 6 is a flowchart illustrating transmission control contents of the data transmitter 43B with respect to a wireless communication device 12B. When the wireless communication device 12B is activated, the data transmitter 43B starts a process shown in FIG. 6 (step S1).

At first, after "False" is initially set for a user data transmission flag UTF in step S2, the sequence goes to a loop process from a loop start point in step S3 to a loop end in step S11.

The sequence goes to a transmission request waiting state where the sequence waits for the user data transmission request R50 from the application executing section 41, or dummy frame transmission request R30 (R31 to R35) from the dummy frame transmitter 42B in step S4. That is to say, the sequence is in the waiting state in step S4 until the above transmission request is made.

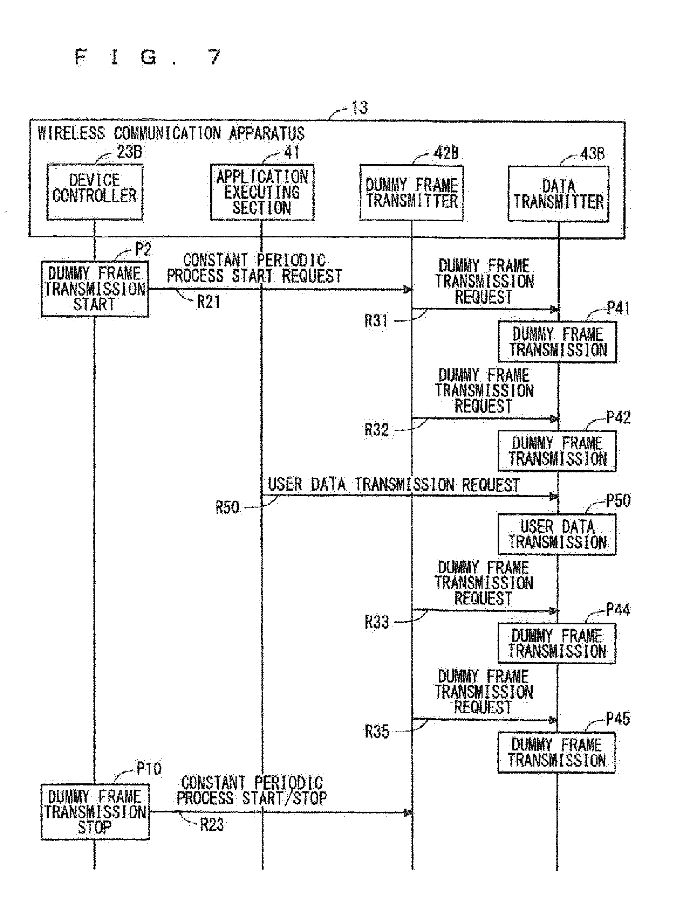

When the transmission request is detected in step S4, the sequence goes to step S5, and a discriminating process according to transmission request classification is executed. The transmission request classification includes the user data transmission request R50 that is requested from the application executing section 41, and the dummy frame transmission request R30 that is requested from the dummy frame transmitter 42B. In this specification, "the dummy frame transmission request R30" is used as a general name of the dummy frame transmission requests (R31 to R35 (see FIG. 7)) that are made periodically.

When the transmission request classification as the discriminated result in step S5 is the user data transmission request R50, the data transmitter 43B executes the user data transmitting process in step S6, the user data transmission flag UTF is set to "True" at next step S7, the sequence returns from the loop end in step S11 to the loop start point in step S3, and again is in the transmission request waiting state in step S4.

On the other hand, when the transmission request classification as the discriminated result in step S5 is the dummy frame transmission request R30, the process for discriminating the user data transmission flag UTF is executed in following step S8. When the user data transmission flag UTF indicates "False", the sequence goes to step S9, and when indicates "True", the sequence goes to step S10.

In step S9 to be executed when the user data transmission flag UTF indicates "False" in step S8, the data transmitter 43B executes the dummy frame transmitting process, and the sequence returns from the loop end point in step S11 to the loop start point in step S4 and is again in the transmission request waiting state in step S4.

On the other hand, when the user data transmission flag UTF indicates "True" in step S8, the user data transmission flag UTF is set to "False" without transmitting dummy frames exceptionally, and the sequence returns from the loop end in step S11 to the loop start point in step S3 so as to be again in the transmission request waiting state of step S4.

"True"/"False" of the user data transmission flag UTF enables presence/non-presence of the dummy frame transmission to be controlled.

Also in the wireless communication apparatus 13, the entire flow of the integral control in the general controller 21 and a process for selecting a communication channel A to be performed by the device controller 22A is similar to that in the wireless communication apparatus 11 according to the first embodiment shown in FIG. 3.

However, in the wireless communication apparatus 13, the transmission contents of the dummy frames mainly through the device controller 22B that receives a dummy frame transmission starting request R1 and dummy frame transmission stop request R9 and then responds of dummy frame transmission stop request response R11 vary.

FIG. 7 is an explanatory diagram illustrating an example of a control operation sequence of the wireless communication device 12B executed among the device controller 23B, the application executing section 41, the dummy frame transmitter 42B, and the data transmitter 43B according to the present embodiment.

As described later, a dummy frame is not transmitted exceptionally in a time zone when the user data transmission (process) P50 is executed. FIG. 7 illustrates an operation during the period between the dummy frame transmission start P2 and the dummy frame transmission stop P10 shown in FIG. 3. A control operating sequence on the side of the wireless communication device 12B according to the second embodiment in FIG. 7 is described below.

The device controller 23B makes the constant period process start request R21 as an initial step of the dummy frame transmission start P2 for the dummy frame transmitter 42B.

When receiving the constant period process start request R21, the dummy frame transmitter 42B starts the constant periodic process, and first makes the dummy frame transmission request R31 as the constant periodic process for the data transmitter 43B.

After the activation, the data transmitter 43B is in the transmission request waiting state as shown in step S4 in FIG. 6. For this reason, upon the reception of the dummy frame transmission request R31, the sequence goes to the transmission request classification discriminating process (S5), and the transmission request classification is discriminated as the dummy frame transmission request R31. The sequence goes to a user data transmission flag discriminating process (S8), the flag is determined as "False", dummy frame transmission (process) P41 (S9) is executed, and the sequence is again in the transmission request waiting state (S4).

Similarly, the data transmitter 43B executes dummy frame transmission P42 based on the dummy frame transmission request R32 from the dummy frame transmitter 42B. In such a manner, the processes (P41 and P42) for transmitting a dummy frame periodically in cooperation with the dummy frame transmitter 42B and the data transmitter 43B.

A case where the application executing section 41 makes the user data transmission request R50 for the data transmitter 43B at certain timing (after execution of the dummy frame transmission P42 in FIG. 7) is described below. At this time, the data transmitter 43B determines that the user data transmission request R50 is received in the transmission request classification discriminating process (S5) next to the transmission request waiting (S4), executes the user data transmission P50 (S6), sets the user data transmission flag UTF to "True" (S7), and again returns to the transmission request waiting state (S4).

When receiving the dummy frame transmission request R33 from the dummy frame transmitter 42B, the data transmitter 43B makes discrimination as the dummy frame transmission request R33 in the transmission request classification discriminating process (S5) next to the transmission request waiting state (S4), and goes to the user data transmission flag discriminating process (S8). The determination is made in step S8 that the user data transmission flag UTF indicates "True", the user data transmission flag UTF is simply set to "False" without executing the dummy frame transmitting process (S10), and the data transmitter 43B is again in the transmission request waiting state (S4).

Even when the data transmitter 43B receives the dummy frame transmission request R33 just after executing the user data transmission P50, it does not execute dummy frame transmission P43.

The dummy frame transmission request R30 is executed repeatedly as the constant periodic operation by the dummy frame transmitter 42B, but the dummy frame transmission P43 in response to the dummy frame transmission request R33 is not executed in a time zone when the user data transmission P50 is executed exceptionally (one period of the transmission timing of the dummy frame transmission request R30).

Thereafter, when the user data transmission request R50 is not made, the data transmitter 43B execute dummy frame transmission P44 according to the dummy frame transmission request R34, and executes dummy frame transmission P45 according to the dummy frame transmission request R35.

Thereafter, when receiving the constant period process stop request R23 according to the dummy frame transmission stop P10, the dummy frame transmitter 42B stops the transmission of the dummy frame transmission request.

In the second embodiment, since user data can be transmitted from the wireless communication device 12B also during the dummy frame transmission that is executed on the side of the wireless communication device 12B when the communication channel A of the wireless communication device 12A is selected without any problem, the communication performance of the user data transmitted from the wireless communication device 12B is not deteriorated.

The second embodiment describes the case where the number of the mounted wireless communication devices is two, but similarly to the first embodiment, the present invention can be certainly applied also to a case where three or more wireless communication devices are mounted in the similar method.

As described above, also when dummy data is periodically transmitted on the side of the communication channel B at the time of executing an interference quantity measuring process in the selection of the communication channel A, the device controller 23B can temporarily stops the dummy data transmitting process in the time zone when the wireless communication device 12B transmits the user data.

For this reason, in the wireless communication apparatus 13 according to the second embodiment, the device controller 22A can execute the interference quantity measuring process for selecting the communication channel A without preventing the transmission of the user data (actual data) using the communication channel B.

Also in the second embodiment, similarly to the first embodiment, when the control is made so that the device controller 23B, the dummy frame transmitter 42B, and the data transmitter 43B execute the dummy data (or user data) transmitting process at least during the execution of the interference quantity measurement P6 in the device controller 22A, the above effect can be achieved.

### Third Embodiment

The first embodiment and the second embodiment describe the method for selecting the communication channel A on the side of the wireless communication device 12A that is adequately adjusted to the interference caused by the transmitting process to be executed by the wireless communication device 12B using the communication channel B upon the transmission of dummy frames (occasionally actual data) in the wireless communication device 12B while the wireless communication device 12A is measuring the interference quantity.

On the other hand, in the third embodiment, the wireless communication device 12B saves the interference quantity to be given to the wireless communication device 12A as profile data in advance, and the wireless communication device 12B is not allowed to transmit a dummy frame at the time of measuring the interference quantity, and the profile data is added to a plurality of interference quantities that is the result of measuring the interference quantity, so that the communication channel A that is adjusted to the interference is selected by the wireless communication device 12B using the wireless communication channel B.

A wireless communication apparatus 14 and its peripheral configuration according to the third embodiment are similar to the wireless communication apparatus 11 and its peripheral configuration according to the first embodiment shown in FIG. 1.

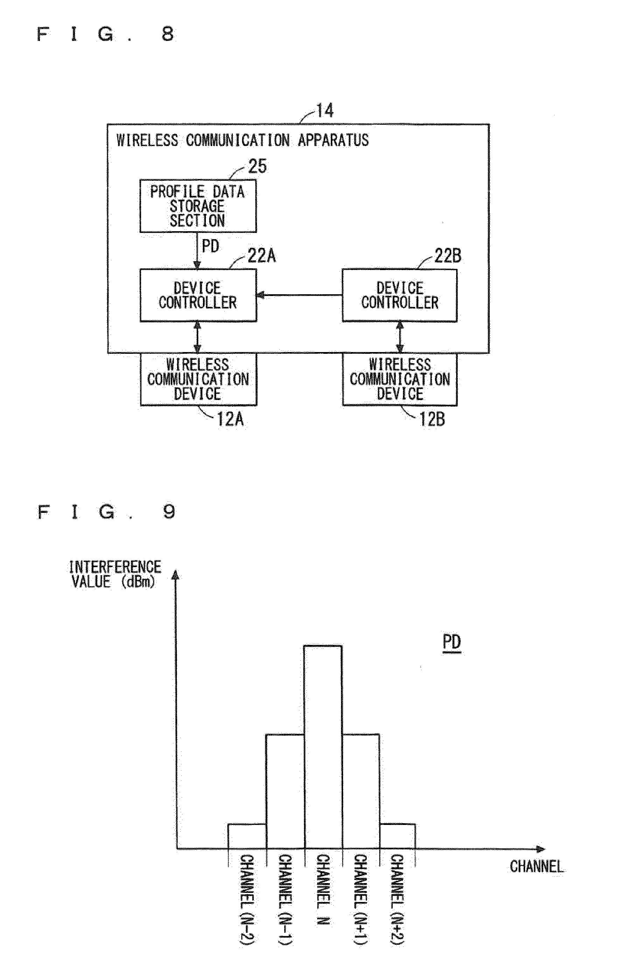

FIG. 8 is a block diagram illustrating an internal configuration of the wireless communication apparatus 14 according to the third embodiment of the present invention. The wireless communication apparatus 14 includes a device controller 22 (22A and 22B), and a profile data storage section 25. As shown in the drawing, the wireless communication apparatus 14 does not have a controller corresponding to an general controller 21 (see FIG. 2 and FIG. 5). The controllers 22A and 22B can be realized by a software process to be executed by a program, for example.

The method for selecting the communication channel A under the control of the device controller 22A in the wireless communication device 12A is described below.

In the third embodiment, the interference quantity of radio waves of the wireless communication device 12B (using the communication channel B) with respect to the wireless communication device 12A is profiled in advance and is saved as profile data PD in the profile data storage section 25 inside the wireless communication apparatus 14.

In the wireless communication apparatus 14 according to the third embodiment, as to the contents of the process for selecting the communication channel A of the wireless communication device 12A, only interference quantity measurement P6 and channel selection P7 that can be independently performed by the device controller 22A are executed in the selecting process in the wireless communication apparatus 11 shown in FIG. 3.

That is to say, the device controller 22B does not execute dummy frame transmission starting request R1, dummy frame transmission start P2, dummy frame transmission start request response R3, dummy frame transmission stop request R9, dummy frame transmission stop P10, and dummy frame transmission stop request response R11 that relate to the dummy frame transmission to be executed by the wireless communication device 12B.

Further, the device controller 22A is different in that it executes an assumed interference quantity calculating process for adding the profile data PD at the time of the interference quantity measurement P6 so as to obtain a plurality of assumed measurement quantities.

FIG. 9 illustrates contents of the interference quantity profile instructed by the profile data PD. In FIG. 9, a profile of the interference quantity (dBm) due to the transmission in the wireless communication device 12B using certain one communication channel B is set for each channel on the side of the wireless communication device 12A. The interference quantity profile represented by the profile data PD retains the interference quantity for a channel N on the side of the wireless communication device 12A and channels before and after the channel N.

In the example shown in FIG. 9, the interference quantities for the channel N and two channels before and after the channel N ((N-2) to (N+2)) are profiled. When the communication channel B that is actually used is determined by the interference quantity profile shown in FIG. 9, the interference quantity profile of the communication channel B that is the channel N can be obtained. The device controller 22A can obtain information about the communication channel B that is actually used by the wireless communication device 12B from the device controller 22B.

As described above, when the process for selecting the communication channel A of the wireless communication device 12A is executed, the interference quantity measurement P6 (see FIG. 3) is started, but the dummy frame transmission is not executed in the third embodiment, differently from the first embodiment and the second embodiment.

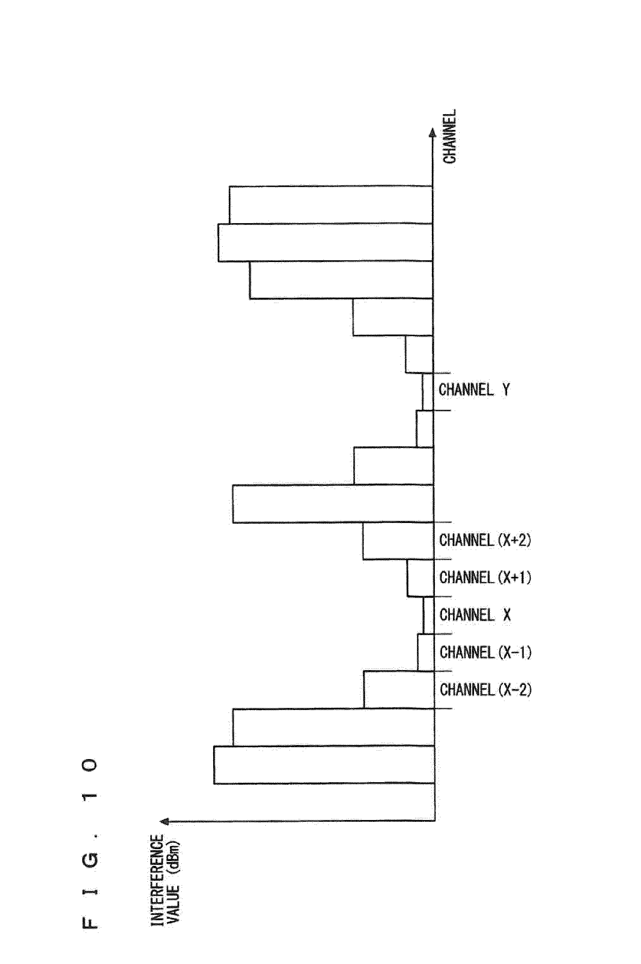

FIG. 10 is an explanatory diagram illustrating an example of the plurality of interference quantities obtained by the interference quantity measurement P6 in the third embodiment. The drawing shows the interference quantity (dBm) for each channel (for each candidate of the communication channel A) as the plurality of interference quantities. The profile represented by the profile data PD shown in FIG. 9 is added to a plurality of measured values that is the actual measured results shown in FIG. 10, so that an assumed interference quantity calculating process for calculating the plurality of assumed measurements is executed.

When the profile is added, a reference channel N (see FIG. 9) on the side of the wireless communication device 12A is determined according to the communication channel B that is actually used by the wireless communication device 12B, and an interference quantity adding process is executed on the related channel.

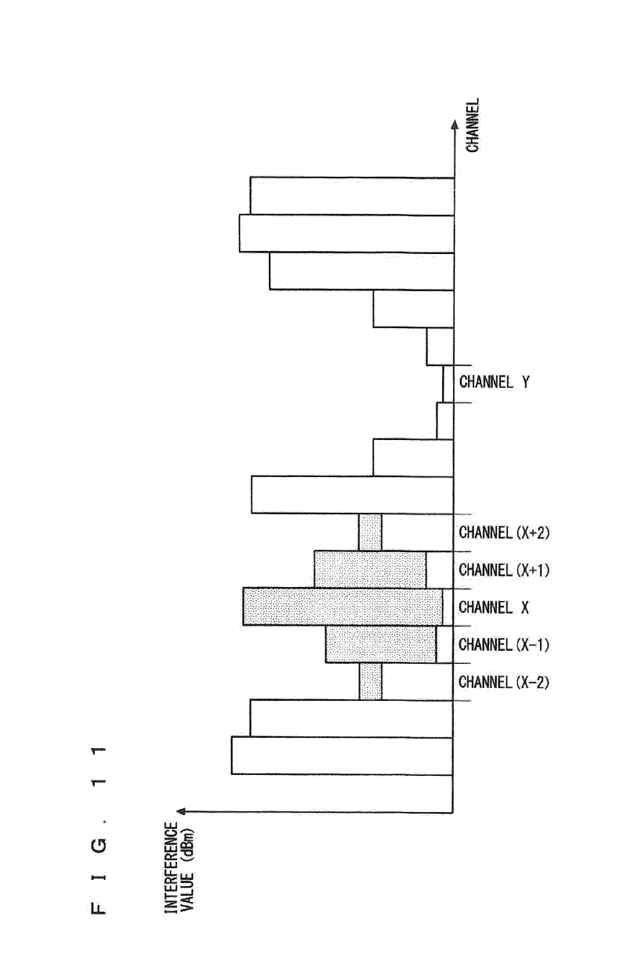

FIG. 11 is an explanatory diagram illustrating results of adding a plurality of measurement quantities that is the results of measuring the interference quantity and the interference quantity profiles. In the drawing, the determination is made according to the communication channel B used by the wireless communication device 12B that the reference channel N shown in FIG. 9 matches with the communication channel X (one of the candidates of the communication channel A), the interference quantity of the reference channel N of the interference quantity profile shown in FIG. 9 is added to the actually measured interference quantity of the communication channel X.

Similarly, the interference quantity of a reference channel (N+1) of the interference quantity profile is added to the actually measured interference quantity of a communication channel (X+1) (one of the candidates of the communication channel A), and the interference quantity of a reference channel (N+2) of the interference quantity profile is added to the interference quantity of a channel (X+2) (one of the candidates of the communication channel A). These added results are shown. The similar addition of the interference quantity is performed also on channels (X-1) and (X-2) according to the profile interference quantity.

As a result, the interference quantity (dBm) of each candidate of the communication channel shown in FIG. 11 is obtained as a plurality of final assumed interference quantities to which the profiles instructed by the profile data PD are added. The plurality of assumed interference quantities are related to the plurality of candidates of the communication channel A.

When the device controller 22A executes the selecting process for the communication channel A, just after the interference quantity measurement P6, not the communication channel X whose interference quantity is the smallest but a communication channel Y in the plurality of assumed interference quantities is determined as the communication channel whose interference quantity is the smallest based on the plurality of assumed interference quantities shown in FIG. 11, and the device controller 22A selects the communication channel Y as the communication channel A.

Accordingly, the wireless communication apparatus 14 according to the third embodiment uses the profile data PD so as to be capable of suitably selecting the communication channel A without allowing the wireless communication device 12B to transmit a dummy frame.

Therefore, in the third embodiment, the wireless communication device 12B can execute the communication process without any trouble at the time of the selecting process executed by the communication channel A of the wireless communication device 12A.

Also in the wireless communication apparatus 13 according to the second embodiment, while deterioration in the communication performance of the wireless communication device 12B is being prevented, the communication channel A can be selected. However, the wireless communication apparatus 14 according to the third embodiment is advantageous in that the communication performance of the wireless communication device 12B is not deteriorated at all.

The third embodiment describes the case where the number of the mounted wireless communication devices is two, but similarly to the first embodiment, the present invention can be applied also to a case where three or more wireless communication devices are mounted in the similar method.

In the wireless communication apparatus 14 according to the third embodiment, when the device controller 22A selects the communication channel A, the interference quantity profile instructed by the profile data PD is added to the plurality of interference quantities that is the interference quantity measured results of the plurality of candidates of the communication channel A at the communication time, so that the plurality of assumed interference quantities is obtained. In such a manner, the assumed interference quantity calculating process is executed. The device controller 22A selects one of the communication channel candidates in the plurality of candidates of the communication channel A as the communication channel A based on the plurality of assumed interference quantities.

For this reason, the wireless communication apparatus 14 according to the third embodiment transmits no dummy data using the communication channel B, and can select the optimum candidate in the plurality of candidates of the communication channel A as the communication channel A.

### The Method for Selecting the Communication Channel A

The methods for selecting the communication channel A used by the wireless communication apparatuses 11, 13 and 14 according to the first embodiment to the third embodiment are described below.

### (In the Case of the Radio Communication Apparatus 11 according to the First Embodiment)

In the wireless communication apparatus 11 mounted with the wireless communication devices 12A and 12B, the method for selecting a communication channel is for selecting the communication channel A to be used by the wireless communication device 12A from the plurality of candidates of the communication channel A. At this time, the wireless communication device 12A can perform radio communication at the first frequency band, and the wireless communication device 12B can perform wireless communication at the second frequency band. At least a part of the second frequency band overlaps with the first frequency band.

The method for selecting the communication channel A according to the first embodiment is realized by executing the following steps (a) to (c) through the control of the device controller 22A and the device controller 22B under the integral control of the general controller 21.
Step (a): the wireless communication device 12B is made to execute a dummy data transmitting process for transmitting a dummy frame (dummy data) using the communication channel B in the second frequency band (the dummy frame transmission start P2 to the dummy frame transmission stop P10 in FIG. 3).
Step (b): The plurality of interference quantities are measured at the time of the communication of the wireless communication device 12A using the plurality of candidates of the communication channel A in the first frequency band (the interference quantity measurement P6 in FIG. 3) during the execution of step (a).
Step (c): One of the plurality of candidates of the communication channel A is selected as the communication channel A based on the plurality of interference quantities (channel selection P7 in FIG. 3).

In the method for selecting the communication channel A according to the first embodiment, while the wireless communication device 12B is made to execute the dummy data transmitting process for transmitting dummy data using the communication channel B in step (a), the interference quantity measuring process is executed so that the plurality of interference quantities are measured in step (b). In step (c), one of the plurality of candidates of the communication channel A is selected as the communication channel A based on the plurality of interference quantities obtained in step (b).

For this reason, the candidate, whose interference is the least at the time of the data transmission through the wireless communication device 12B using the communication channel B, can be selected from the plurality of candidates of the communication channel A as the communication channel A. As a result, also when the wireless communication devices 12A and 12B simultaneously execute the communication process on the communication channel A and the communication channel B, the transmitting/receiving process whose communication rate and response performance are excellent can be executed.

### (In the Case of the Radio Communication Apparatus 13 according to the Second Embodiment)

The method for selecting the communication channel A according to the second embodiment is realized by executing improved step (a) of the following content as an additional function of step (a) in the first embodiment through the control of the device controller 22A and a device controller 23B under the integral control of the general controller 21.

Improved step (a): The dummy data transmitting process is temporarily stopped (in FIG. 7, dummy frame transmission P43 in response to the dummy frame transmission request R33 is not performed) using the communication channel B in a time zone when actual data is transmitted (corresponding to a time zone when user data transmission P50 and thereafter dummy frame transmission request R33 in FIG. 7 are performed).

In the method for selecting the communication channel A according to the second embodiment, since above improved step (a) is executed, the device controller 22A can execute the interference quantity measuring process for selecting the communication channel A without preventing the transmission of user data (actual data) using the communication channel B.

### (In the Case of the Radio Communication Apparatus 14 according to the Third Embodiment)

In the wireless communication apparatus 14 mounted with the wireless communication devices 12A and 12B, the method for selecting a communication channel is for selecting the communication channel A to be used by the wireless communication device 12A from the plurality of candidates of the communication channel A.

The method for selecting the communication channel A according to the third embodiment is realized by executing the following new steps (a) to (d) through the control of the device controller 22A.
Step (a): The assumed interference quantity (profile) caused by the communication of the wireless communication device 12B using the communication channel B in the second frequency band with respect to the communication using the communication channel A of the wireless communication device 12A is preliminarily prepared as the profile data PD (stored in the profile data storage section 25 in advance).
Step (b): The plurality of interference quantities at the time of the communication of the wireless communication device 12A using the plurality of candidates of the communication channel A is measured.
Step (c): The profile data PD (FIG. 9) is added to the plurality of interference quantities (FIG. 10), and the plurality of assumed interference quantities (FIG. 11) corresponding to the plurality of candidates of the communication channel A is calculated.
Step (d): One of the plurality of candidates of the communication channel A is selected as the communication channel A based on the plurality of assumed interference quantities.

With reference to the method for selecting the communication channel A according to the first embodiment shown in FIG. 3, step (b) and step (c) correspond to the interference quantity measurement P6, and step (d) corresponds to the channel selection P7.

In the method for selecting the communication channel A according to the third embodiment, since steps (a) to (d) are executed, optimum one of the plurality of candidates of the communication channel A can be selected as the communication channel A without performing transmission of dummy data (dummy frame) using the communication channel B at all.

In the present invention, the embodiments can be freely combined with each other, and suitably modified and omitted within the scope of the present invention.

The present invention is described in detail, but the above description is only an example in all aspects, and the present invention is not limited to this description. It is understood that an untold number of modified examples unillustrated here can be assumed without departing from the scope of the present invention.

### Explanations of Letters or Numerals

- 11: wireless communication apparatus
- 12A: wireless communication device
- 12B: wireless communication device
- 13: wireless communication apparatus
- 14: wireless communication apparatus
- 15A: communication equipment
- 15B: communication equipment
- 21: general controller
- 22A: device controller
- 22B: device controller
- 23B: device controller
- 25: profile data storage section
- 41: application executing section
- 42B: dummy frame transmitter
- 43B: data transmitter.

## Claims

1. A wireless communication apparatus comprising:
- a first wireless communication device capable of performing wireless communication in a first frequency band;
- a second wireless communication device capable of performing wireless communication in a second frequency band, at least a part of the second frequency band overlapping with the first second frequency band;
- a first device controller for selecting a first communication channel from a plurality of first communication channel candidates in the first frequency band and controlling communication through the first wireless communication device using the first communication channel; and
- a second device controller for controlling communication through the second wireless communication device using a second communication channel in the second frequency band, wherein
when the first communication channel is selected, the first device controller is adapted to execute an interference quantity measuring process for measuring a plurality of interference quantities at time of the communication of the first wireless communication device using the plurality of first communication channel candidates, and to select one candidate of the plurality of first communication channel candidates as the first communication channel based on the plurality of interference quantities,
the second device controller is adapted to control the second wireless communication device so that a dummy data transmitting process for transmitting dummy data is executed by using the second communication channel during the execution of the interference quantity measuring process in the first device controller.

2. The wireless communication apparatus according to claim 1,
wherein the second device controller is adapted to temporarily stop the dummy data transmitting process in a time zone when the second wireless communication device transmits actual data on the second communication channel.

3. The wireless communication apparatus according to claim 1 or 2, further comprising:
a general controller for integrally controlling the first and second device controllers so that the second device controller is adapted to execute the dummy data transmitting process during the interference quantity measuring process in the first device controller.

4. A wireless communication apparatus comprising:
- a first wireless communication device capable of performing wireless communication in a first frequency band;
- a second wireless communication device capable of performing wireless communication in a second frequency band, at least a part of the second frequency band overlapping with the first second frequency band;
- a first device controller for selecting a first communication channel from a plurality of first communication channel candidates in the first frequency band and controlling communication through the first wireless communication device using the first communication channel:
- a second device controller for controlling communication through the second wireless communication device using a second communication channel in the second frequency band; and
- a profile data storage section for storing an assumed interference quantity caused by the communication using the second communication channel of the second wireless communication device with respect to the communication using the first communication channel of the first wireless communication device as profile data, wherein
when the first communication channel is selected, the first device controller is adapted to execute an assumed interference quantity calculating process for measuring a plurality of interference quantities at time of communication of the plurality of first communication channel candidates, and adding the profile data to the plurality of measurement quantities so as to calculate a plurality of assumed interference quantities, and to select one communication channel candidate in the plurality of first communication channel candidates as the first communication channel based on the plurality of assumed interference quantities.

5. A communication channel selecting method for selecting a first communication channel to be used by a first wireless communication device from a plurality of first communication channel candidates in a wireless communication apparatus mounted with first and second wireless communication devices, the first wireless communication device capable of performing wireless communication in a first frequency band, the second wireless communication device capable of performing wireless communication in a second frequency band, at least a part of the second frequency band overlapping with the first second frequency band, the method comprising the steps of:
(a) making the second wireless communication device execute a dummy data transmitting process for transmitting dummy data using a second communication channel in the second frequency band;
(b) measuring a plurality of interference quantities at time of communication of the first wireless communication device using the plurality of first communication channel candidates in the first frequency band during the execution of the step (a); and
(c) selecting one communication channel candidate as the first communication channel from the plurality of first communication channel candidates based on the plurality of interference quantities.

6. The communication channel selecting method according to claim 5, wherein the step (a) includes a step of temporarily stopping the dummy data transmitting process in a time zone when actual data is transmitted on the second communication channel.

7. A communication channel selecting method for selecting a first communication channel for a first wireless communication device from a plurality of first communication channel candidates in a wireless communication apparatus mounted with first and second wireless communication devices, the first wireless communication device capable of performing wireless communication in a first frequency band, the second wireless communication device capable of performing wireless communication in a second frequency band, at least a part of the second frequency band overlapping with the first frequency band,
the method comprising the steps of:
(a) preliminarily preparing an assumed interference quantity caused by communication using a second communication channel in the second frequency band with respect to the communication using the first communication channel of the first wireless communication device as profile data in the second wireless communication device;
(b) measuring a plurality of interference quantities at time of communication of the first wireless communication device using the plurality of first communication channel candidates in the first frequency band;
(c) adding the profile data to the plurality of interference quantities so as to calculate a plurality of assumed interference quantities corresponding to the plurality of first communication channel candidates; and
(d) selecting one communication channel candidate as the first communication channel from the plurality of first communication channel candidates based on the plurality of assumed interference quantities.
